# EUROPEAN PATENT SPECIFICATION

(11) **EP 1 835 776 B1**
(45) Date of publication and mention of the grant of the patent: **20.08.2008**
(21) Application number: 06005474.9
(22) Date of filing: 17.03.2006
(51) Int. Cl.: H04Q 7/38

(54) **Method and apparatus to restore always-on connectivity during network handover**
Verfahren und Vorrichtung zum Wiederherstellen einer immer eingeschalteten Verbindung während Weiterreichen zwischen Netzen
Procédé et dispositif pour la restoration d'une connectivité toujours active pendant un transfert entre réseaux

(43) Date of publication of application: 19.09.2007
(73) Proprietor: Research In Motion Limited, Waterloo, Ontario N2L 3W8 (CA)
(72) Inventor: Islam, Muhammad Khaledul, Ottawa, Ontario K2K 3N4 (CA); Wirtanen, Jeffrey, Ottawa, Ontario K2K 2L9 (CA); Cornier, Jean-Philippe, Ottawa, Ontario K1R 6N5 (CA); Prodanos, Dimitrios, Ottawa, ON K2P OT5 (CA)
(74) Representative: Rickard, David John

(56) References cited:
- EP-A- 1 079 656
- EP-A- 1 494 494
- US-B1- 6 771 964
- "3rd Generation Partnership Project; Technical Specification Group Core Network and Terminals; Mobile radio interface Layer 3 specification; Core network protocols; Stage 3 (Release 7)" 3GPP TS 24.008 V7.2.0, December 2005 (2005-12), pages 94-140, XP002399927

## Description

The present disclosure relates to always-on mobile stations in 3GPP networks and in particular to procedures for transitioning user equipment between a network that does not support concurrent voice and data to a network that does support concurrent voice and data.

Always-on user equipment is expected to maintain packet data connectivity at all times and to always be reachable for push services. Further, the always-on user equipment must ensure that packet data protocol (PDP) contexts associated with its most important applications are maintained.

Data connectivity may however not be always automatically maintained or restored after a dual mode UE, that supports GSM and UMTS, performs a GSM to UMTS reselection or handover. More generally, data connectivity may not be maintained when the dual mode UE transitions between any network that does not support concurrent voice and data to a network that does support concurrent voice and data.

In the above-described transition, there may not be any instant trigger to cause signaling communication with the network, such as a change in location area code/routing area code (LAC/RAC). There may also be no outbound user data on the user equipment that would force the user equipment to send a routing area update message in case there was a RAC change. Such signaling messages are required to maintain or initiate restoration of PDP context.

In the case of the user equipment being in a voice call during a transition, a packet session that was suspended when the call was initiated in GSM or handed over to GSM may not resume until the voice call ends in UMTS. In this case, the user equipment will not be reachable from a packet data perspective even after it has entered a network that supports concurrent voice and data.

Further, if the user equipment performs a cell reselection from GSM to UMTS within the same routing area, according to 3GPP specifications (TS 24.008) there is no need to do an update if the UE is in packet mobility management (PMM) idle mode in UMTS until up-link user data or signaling information needs to be sent from the MS to the network, In addition, although 3GPP specifications (TS 24.008) indicate that after the successful completion of the handover from an GSM cell to an UMTS cell, a UE shall perform a normal RA update procedure in the UMTS cell in order to resume the GPRS services in the network before sending any other signaling messages or user data, 3GPP specifications do not mention when such update should take place. In such situations, if an always-on UE does not perform such update immediately after GSM to UMTS idle reselection or active voice call handover, UE may not be available from the perspective of push servers.

It is quite possible that the number of concurrent primary PDP contexts supported by a UMTS network is different from the number of concurrent primary PDP contexts supported by the GPRS network. For example, currently most UMTS networks support only one or in some cases a maximum of two concurrent primary PDP contexts, whereas GPRS networks support more than that. An always-on device needs to restore its most important PDP context such a context associated with its the push APN (access point name) context as soon as concurrent voice and packet data services are available.

EP-A-1494494 discloses an inter radio access technology (RAT) handover to UTRAN with simultaneous packet switched and circuit switched domain services. This document discusses the performance of an inter-RAT handover to UTRAN from a network such as GSM with active circuit switched and packet switched connections at the GSM. However it is not contemplated that the packet switched service may be suspended prior to handover.

EP-A-1079656 teaches a routing area update optimization in a standby state for multi-system packet radio networks. In particular, this disclosure relates to routing area updates that take place as the mobile terminal moves from one radial access coverage area to another.

### GENERAL

The present method and apparatus preferably provide for always-on user equipment (UE) to maintain packet data connectivity at all times. According to the present method and apparatus, a UE performs a routing area update with PDP context status information as soon as a GSM to UMTS handover or reselection is complete, regardless of whether the UE is made aware of a routing area change or a location area change or even if there is no change in the routing area code or location area code.

The method and apparatus of the present disclosure further preferably provide for the sending of a small packet to always-on push servers right after the handover of a voice call. Outbound data forces the mobile to send a routing area update request prior to actual data exchange. By doing so, the UE finds out if there is any change in existing PDP contexts such as the number of PDP contexts supported by the network, IP address and restores its preferred PDP contexts if required.

The present disclosure therefore preferably provides a method to restore always on connectivity to user equipment, the method comprising the steps of:
monitoring whether the user equipment has transitioned to a second network that supports concurrent voice and data from a first network in which a packet switched service is suspended, said monitoring step including checking whether the user equipment is in a voice call during the transition; and
performing, upon detecting that the user equipment is in a voice call during the transition, a routing area update by sending a data packet to the second network that supports concurrent voice and data, causing said routing area update to be performed.

The present disclosure further preferably provides always-on user equipment adapted to restore always-on connectivity during network handover, the user equipment having a radio subsystem including a radio adapted to communicate with the mobile network; a radio processor having a digital signal processor and adapted to interact with said radio subsystem; memory; a user interface; a processor adapted to run user applications and interact with the memory, the radio and the user interface and adapted to run applications, the user equipment characterized by having means for:
monitoring whether the user equipment has transitioned to a second network that supports concurrent voice and data from a first network in which a packet switched service is suspended, said monitoring step including checking whether the user equipment is in a voice call during the transition; and
performing, upon detecting that the user equipment is in a voice call during the transition, a routing area update by sending a data packet to the second network that supports concurrent voice and data, causing said routing area update to be performed.

### BRIEF DESCRIPTION OF THE DRAWINGS

The present disclosure will be better understood with reference to the drawings in which:
**Figure 1** is a block diagram of an exemplary network for use in association with the present method and apparatus;
**Figure 2** is a block diagram of the UMTS networks of **Figure 1****;**
**Figure 3** is a schematic diagram showing routing areas being controlled by an SGSN;
**Figure 4** is a flow chart showing a preferred method;
**Figure 5** is a flow chart showing a method of maintaining data connectivity during an idle handover or cell reselection;
**Figure 6** is a flow chart showing a method of restore data connectivity in a transition during a voice call; and
**Figure 7** is a block diagram showing exemplary user equipment that can be used in association with the present apparatus and method.

### DESCRIPTION OF PREFERRED EMBODIMENTS

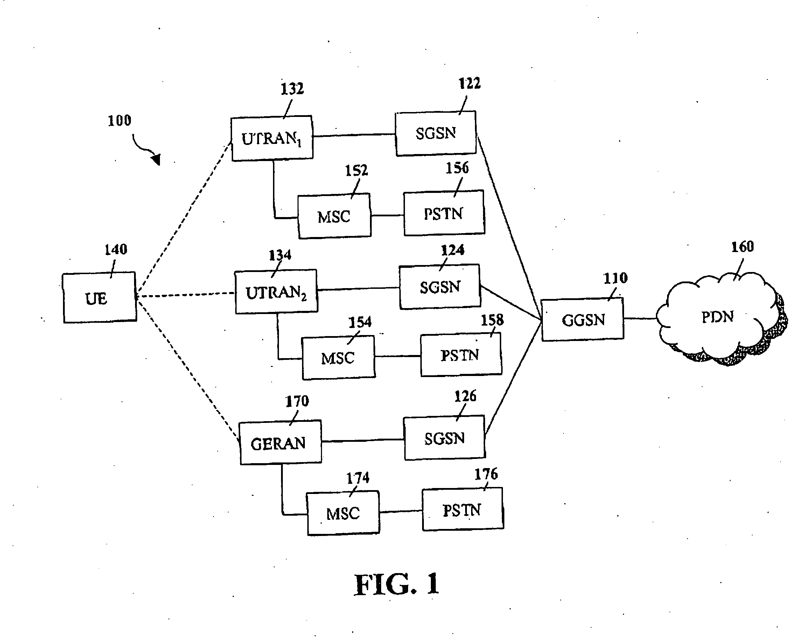

Reference is now made to **Figure 1**. **Figure 1** illustrates a simplified block diagram of a network **100** showing a gateway GPRS support node (GGSN) **110** communicating with various service GPRS support notes (SGSN) **122, 124** and **126** respectively.

As illustrated in **Figure 1****,** SGSN **122** and SGSN **124** are part of a universal mobile telecommunications system (UMTS) network. A UMTS network is a broadband, packet based network for the transmission of text, digitized voice, video and multi-media. It is a highly subscribed standard for third generation and is generally based on wideband coded divisional multiple access (W-CDMA).

SGSN **122** communicates with a UMTS terrestrial radio access node (UTRAN) **132.** User equipment **140** communicates through UTRAN **132,** SGSN **122,** GGSN **110** and ultimately to a packet data network (PDN) **160.**

Similarly, user equipment **140** could communicate with UTRAN **134,** which communicates with SGSN **124.**

For circuit switched communications, user equipment **140** can communicate through UTRAN **132** or UTRAN **134** to mobile switching centre (MSC) **152** and **154** respectively. MSC **152** and MSC **154** communicate with public switched telephone networks (PSTN) **156** and **158** respectively.

As will be appreciated by those skilled in the art, a UMTS network is a third generation network that supports concurrent voice and data. Data travels from the packet data network **160** through GGSN **110** and through either SGSN **122** or **124** to UTRAN **132** or **134** and ultimately to the user equipment **140.** Voice or circuit switched communications are routed through the PSTN **156** or **158,** through MSC **152** or **154,** through UTRAN **132** or **134** and to user equipment **140.**

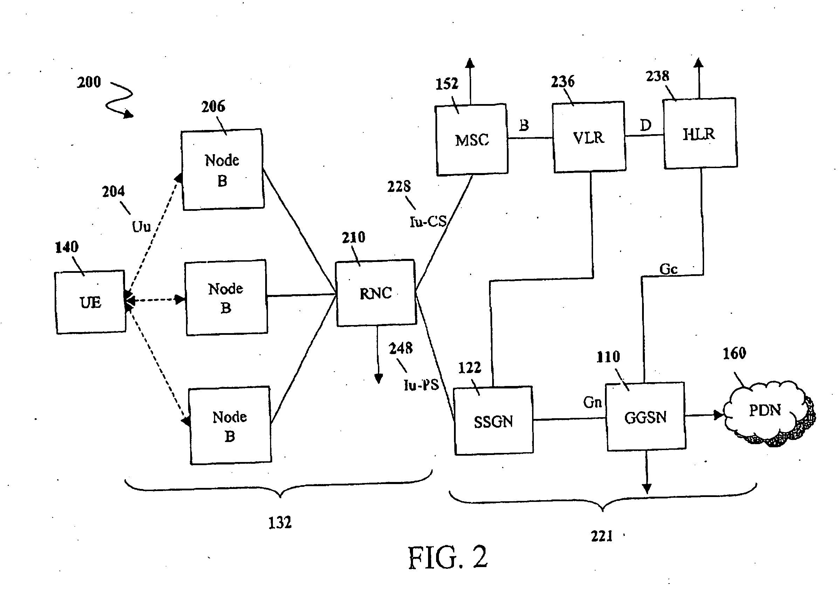

A more detailed description of a UMTS network is illustrated in **Figure 2. Figure 2** is a block diagram of a communication system **200**. Similar numbering will be used for similar components between **Figure 1** and **2****.**

Communications system **200** includes a UE **140** which communicates through a wireless communication network. UE **140** communicates wirelessly with one of multiple Node Bs **206.** Each Node B **206** is responsible for air interface processing and some radio resource management functions. Node B **206** provides functionality similar to a Base Transceiver Station in a GSM/GPRS networks.

The wireless link shown in communication system **200** of **Figure 2** represents one or more different channels, typically different radio frequency (RF) channels, and associated protocols used between the wireless network and UE **140.** A Uu air interface **204** is used between UE **202** and Node B **206.**

An RF channel is a limited resource that must be conserved, typically due to limits in overall bandwidth and a limited battery power of UE **140.** Those skilled in art will appreciate that a wireless network in actual practice may include hundreds of cells depending upon desired overall expanse of network coverage. All pertinent components may be connected by multiple switches and routers (not shown), controlled by multiple network controllers.

Each Node B **206** communicates with a radio network controller (RNC) **210.** The RNC **210** is responsible for control of the radio resources in its area. One RNC **210** controls multiple Node Bs **206.**

The RNC **210** in UMTS networks provides functions equivalent to the Base Station Controller (BSC) functions in GSM/GPRS networks. However, an RNC **210** includes more intelligence including, for example, autonomous handovers management without involving MSCs and SGSNs.

The interface used between Node B **206** and RNC **210** is an lub interface **208.** An NBAP (Node B application part) signaling protocol is primarily used, as defined in 3GPP TS 25.433 V3.11.0 (2002-09) and 3GPP TS 25.433 V5.7.0 (2004-01).

Universal Terrestrial Radio Access Network (UTRAN) **132** comprises the RNC **210,** Node B **206** and the Uu air interface **204.**

Circuit switched traffic is routed to Mobile Switching Centre (MSC) **152.** MSC **152** is the computer that places the calls, and takes and receives data from the subscriber or from PSTN (not shown).

Traffic between RNC **210** and MSC **152** uses the lu-CS interface **228.** lu-CS interface **228** is the circuit-switched connection for carrying (typically) voice traffic and signaling between UTRAN **132** and the core voice network. The main signaling protocol used is RANAP (Radio Access Network Application Part). The RANAP protocol is used in UMTS signaling between the Core Network **221,** which can be a MSC **152** or SSGN **122** (defined in more detail below) and UTRAN **132.** RANAP protocol is defined in 3GPP TS 25.413 V3.11.1 (2002-09) and TS 25.413 V5.7.0 (2004-01).

For all UEs **140** registered with a network operator, permanent data (such as UE **102** user's profile) as well as temporary data (such as UE's **140** current location) are stored in a home location registry (HLR) **238.** In case of a voice call to UE **140,** HLR **238** is queried to determine the current location of UE **140.** A Visitor Location Register (VLR) **236** of MSC **152** is responsible for a group of location areas and stores the data of those mobile stations that are currently in its area of responsibility. This includes parts of the permanent mobile station data that have been transmitted from HLR **238** to the VLR **236** for faster access. However, the VLR **236** of MSC **152** may also assign and store local data, such as temporary identifications. UE **140** is also authenticated on system access by HLR **238.**

Packet data is routed through Service GPRS Support Node (SGSN) **122.** SGSN **122** is the gateway between the RNC and the core network in a GPRS/UMTS network and is responsible for the delivery of data packets from and to the UEs within its geographical service area. lu-PS interface **248** is used between the RNC **210** and SGSN **122,** and is the packet-switched connection for carrying (typically) data traffic and signaling between the UTRAN **132** and the core data network. The main signaling protocol used is RANAP (described above).

The SSGN **122** communicates with the Gateway GPRS Support Node (GGSN) **110.** GGSN **110** is the interface between the UMTS/GPRS network and other networks such as the Internet or private networks. GGSN **110** is connected to a public data network PDN **160** over a Gi interface.

Those skilled in art will appreciate that wireless network may be connected to other systems, possibly including other networks, as shown in **Figure 1****.** A network will normally be transmitting at very least some sort of paging and system information on an ongoing basis, even if there is no actual packet data exchanged. Although the network consists of many parts, these parts all work together to result in certain behaviours at the wireless link.

As further illustrated in **Figure 1****,** a GSM edge radio access network (GERAN) 170 communicates with user equipment **140.** GERAN **170** communicates through an SGSN **126** to GGSN **110.**

GERAN **170** further communicates with an MSC **174** and PSTN **176** for circuit switched communications.

GERAN **170** is an example of a GPRS system with enhanced data rates for data. However, for Class B GPRS operation, concurrent voice and packet data services are not supported. Since voice services take precedence over data services in class B GPRS operation, GPRS packet data services are suspended when user initiates a voice call or takes an incoming voice call_

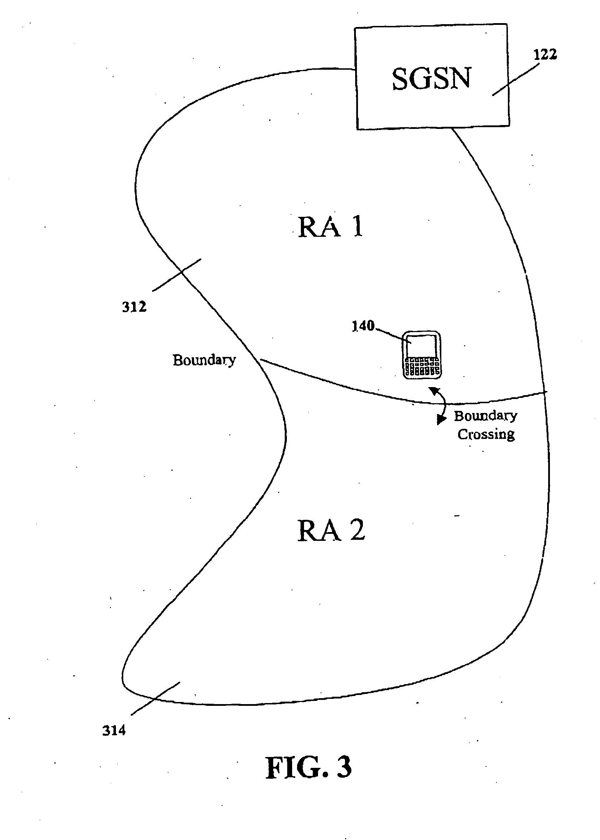

Reference is now made to **Figure 3****.** As will be appreciated by those skilled in the art, a Location Area Code (LAC) is a fixed length code (of 2 octets) identifying a location area within a Public Land Mobile Network (PLMN). The LAI is composed of Mobile Country Code (MCC), Mobile Network Code (MNC) and LAC.

A Routing Area Code (RAC) is a fixed length code (of 1 octet) identifying a routing area within a location area. The routing area identity (RAI) is composed of the LAI and the routing area code. RAI is typically used for packet data service registration.

As illustrated in **Figure 3****,** a SGSN **122** can include one or more routing areas associated therewith. In the case of **Figure 3****,** two routing areas are illustrated, namely routing areas **312** and **314.**

User equipment **140** is responsible to keep SGSN **122** informed of its current routing area to facilitate communication with user equipment **140.**

Always on user equipment **140** is expected to maintain packet data connectivity at all times. Further, because it is an always on device, user equipment **140** will prefer to be in a network that supports both voice and data concurrently rather than in a network which only supports one or the other. Thus, user equipment **140** will continually be checking to see whether it can connect to a network that supports both voice and data concurrently.

In one example, user equipment **140** is a GSM/UMTS dual mode UE which is required to perform GSM/UMTS re-selection or handovers at cell boundaries or as directed by the network.

Referring again to **Figure 1****,** user equipment **140** could be connected to GERAN **170** and receiving data through SGSN **126.** When a voice call is made to user equipment **140,** it is routed through MSC **174** to GERAN **170** and to UE **140.** Any data being sent from PDN **160** is suspended during the voice call.

If, during the voice call, a handover occurs to a UMTS network, the voice call is switched to, for example, MSC **154** and continues. In some networks, MSC can be shared between GSM and UMTS. For data, however, the switch from the GSM to the UMTS network may not cause any instant trigger or outbound user data on user equipment **140** that would force the UE to send a routing area update message. The data reconnection may not occur until the voice call ends.

According to 3GPP TS 24.008 specifications:
"After the successful completion of the handover from a GSM cell to a UMTS cell, a MS which has performed the GPRS suspension procedure in a Gb mode (C3GPP TS 04.18) (i.e. a MS in MS operation mode B or a DTM MS in a GSM cell that does not support DTM) shall perform a normal RA update procedure in the UMTS cell in order to resume the GPRS services in the network, before sending any other signaling message or user data".

The standard therefore requires that before any data is sent, a routing area update procedure must be performed. However, after a successful completion of voice handover, there may not be any user data to be sent. As a result, a packet data session that was suspended when the call was initiated in GSM or due to handover to GSM may not resume until the voice call ends in UMTS. In such a case, user equipment **140** will not be reachable from a packet data perspective even after it has entered a network that supports concurrent voice and data.

If there is no ongoing voice call, a transition may still not cause a routing area update to occur right away. For example, it is possible that a device may perform a reselection from a GPRS to a UMTS network within the same routing area. Pursuant to 3GPP specifications, there is no need to do an update if the routing area stays the same and is in PMM-IDLE mode in UMTS until there is some user data to send. According to section 4.7.17 of 3GPP TS 24.008:
If the READY timer is not running in the MS in GSM or the MS is in PMM-IDLE mode in UMTS, then the MS shall not perform a RA update procedure (as long as the MS stays within the same RA) until up-link user data or signaling information needs to be sent from the MS to the network.

The above therefore shows that if the device is in a PMM-IDLE mode, no RA update procedure is performed until user data is to be sent from the user equipment **140.**

However, when a transition occurs between a GPRS and a UMTS, packet data protocol (PDP) contexts may change. It is quite possible that the number of concurrent primary PDP contexts supported by UMTS networks is different from GPRS networks. Most UMTS networks support only one or a maximum of two concurrent PDP contexts whereas GPRS networks support more than that. An Always-on device needs to restore its most important PDP contexts, such as the PDP context associated with a push server, as soon as the network support of concurrent voice and packet data service is available. The transition from a GPRS network or networks that do not support both voice and data concurrently to a network which does support both voice and data concurrently such as a UMTS network may lead to the PDP context changing. In addition, the IP address could also change in a transition between the GPRS and UMTS networks.

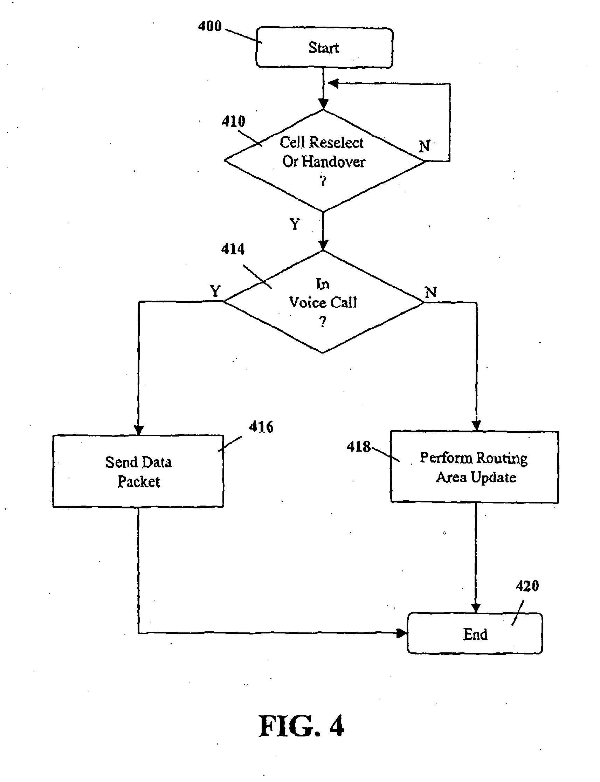

Reference is now made to **Figure 4. Figure 4** illustrates a flow chart of a preferred method according to the present disclosure. In **Figure 4****,** a process starts at step **410.** The process is run on user equipment such as user equipment **140** of **Figure 1****.**

The process checks, in step **410,** whether a cell reselection or handover had occurred. As will be appreciated by those skilled in the art, the handover could be between networks that do not support concurrent voice and data to networks that support concurrent voice and data. However, it will be appreciated by those skilled in the art that any transition to a network that supports both voice and data is contemplated by the present method. Thus if a transition occurs between two networks that both support concurrent voice and data, the present method will also apply.

If no cell reselection or handover has occurred in step **410,** the process continues to monitor whether a handover has occurred.

Conversely, if a cell reselection or handover has occurred, the process proceeds to step **414** in which user equipment **140** checks whether it is in a voice call. As will be appreciated, if the user equipment is in a voice call, a different action may need to be taken than if the user equipment **140** is performing an idle handover or cell reselection.

if in a voice call and since the user equipment **140** is now in a network that supports both concurrent voice and data, the process proceeds to step **416** in which a small data packet is sent to an always-on push server. This occurs right after the handover of the voice call. The outbound data forces the user equipment **140** to send a routing area update and by doing so the mobile finds out whether there is any change in existing PDP contexts. This could, for example, include a change in the quality of service, if any, or PDP address. The preferred PDP contexts are also thereby restored by sending the data packet in step **416.**

If the check in step **414** found that the user equipment **140** was not in a voice call, or cell reselection has occurred and the process proceeds to step **418.** In step **418,** user equipment **140** performs a routing area update with PDP status information. Step **418** thereby provides for the maintenance of packet data connectivity as soon as a handover is complete. The process next proceeds to step **420** and ends.

The method as outlined in **Figure 4****,** therefore, sends control data to a push server immediately after an inter-routing area transfer, handover or cell reselection regardless of whether the location area or routing area has changed and regardless of whether the UE has any outbound user-data.

As will be appreciated by those skilled in the art, implementation of the method of **Figure 4** could be separated into a process for the handover during a voice call and a process for causing a routing area update during and idle transition or cell reselection. These two processes can be independent of each other, and one can be used with or without the other. Thus user equipment **140,** in one embodiment, could implement the sending of a small data packet on transition during a voice call, but not implement the routing area update on idle transition or cell reselection, and vice versa.

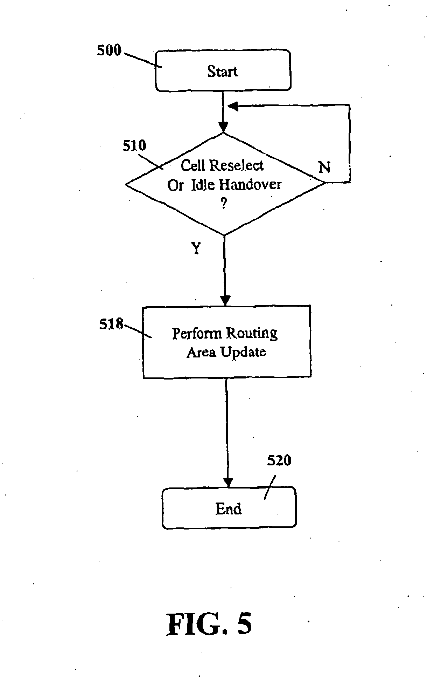

Reference is now made to **Figure 5. Figure 5** is a flow chart showing the process for the maintenance of data connectivity during an idle handover or cell reselection- The process of **Figure 5** starts in step **500** and proceeds to step **510** in which it checks whether a cell reselection or idle handover has occurred. If no cell reselection or idle handover has occurred, then the process remains in step **510** until the cell reselection or idle handover has occurred.

Once a cell reselection or idle handover has occurred, the process proceeds to step **518** in which a routing area update is performed. The routing area update includes PDP status information as described above with reference to step **418** of **Figure 4****.**

The process then ends in step **520.**

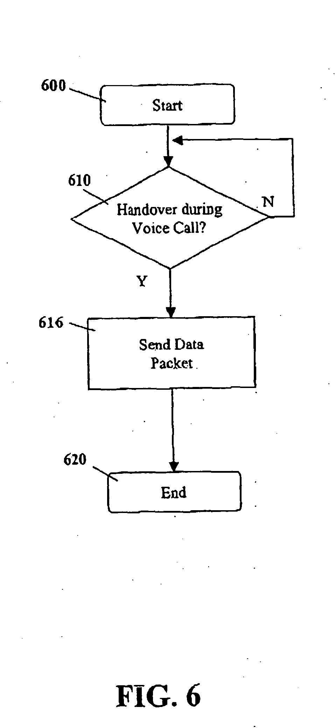

Referring to **Figure 6, Figure 6** shows a process for a handover during a voice call. The process starts in step **600** and proceeds to step **610** in which it checks whether a handover has occurred during a voice call. If the handover has not occurred during voice call, the process stays in **610** until a handover does occur.

Once a handover occurs in step **610,** the process proceeds to step **616** in which a data packet is sent. As with step **416** of **Figure 4****,** the data packet being sent from user equipment **140** triggers a routing area update and by doing so the mobile finds out whether or not there has been any change in existing PDP contexts. The preferred PDP contexts are thereby restored through the sending of a data packet in steps **616.**

The process then proceeds to step **620** and ends.

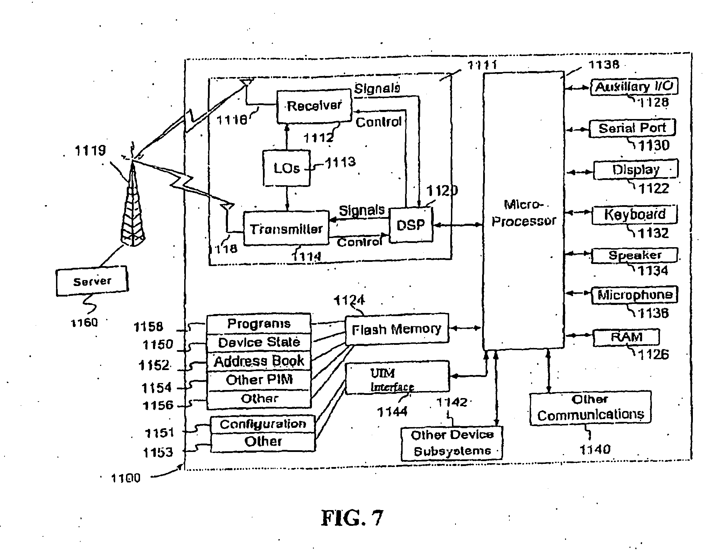

The above could be implemented on any user equipment that is dual mode operable. Referring to **Figure 7,Figure 7** illustrates one exemplary UE that can be used with the above method.

UE **1100** is preferably a two-way wireless communication device having at least voice and data communication capabilities, and can be UE **140** of **Figures 1****,** **2** and **3****.** UE **1100** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where UE **1100** is enabled for two-way communication, it will incorporate a communication subsystem **1111,** including both a receiver **1112** and a transmitter **1114,** as well as associated components such as one or more, preferably embedded or internal, antenna elements **1196** and **1118,** local oscillators (LOs) **1113,** and a processing module such as a digital signal processor (DSP) **1120.** As will be apparent to those skilled in the field of communications, the particular design of the communication subsystem **1111** will be dependent upon the communication network in which the device is intended to operate. For example, UE **1100** may include a communication subsystem **1111** designed to operate within the GPRS network or UMTS network.

Network access requirements will also vary depending upon the type of network **1119.** For example, In UMTS and GPRS networks, network access is associated with a subscriber or user of UE **1100.** For example, a GPRS mobile device therefore requires a subscriber identity module (SIM) card in order to operate on a GPRS network. In UMTS a USIM or SIM module is required. In CDMA a RUIM card or module is required. These will be referred to as a UIM interface herein. Without a valid UIM interface, a mobile device may not be fully functional. Local or non-network communication functions, as well as legally required functions (if any) such as emergency calling, may be available, but mobile device **1100** will be unable to carry out any other functions involving communications over the network **1100.** The UIM interface **1144** is normally similar to a card-slot into which a card can be inserted and ejected like a diskette or PCMCIA card. The UIM card can have approximately 64K of memory and hold many key configuration **1151,** and other information **1153** such as identification, and subscriber related information.

When required network registration or activation procedures have been completed, UE **1100** may send and receive communication signals over the network **1119.** Signals received by antenna **1116** through communication network **1119** are input to receiver **1112,** which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **1120.** In a similar manner, signals to be transmitted are processed, including modulation and encoding for example, by DSP **1120** and input to transmitter **1114** for digital to analog conversion, frequency up conversion, filtering, amplification and transmission over the communication network **1119** via antenna **1118.** DSP **1120** not only processes communication signals, but also provides for receiver and transmitter control. For example, the gains applied to communication signals in receiver **1112** and transmitter **1114** may be adaptively controlled through automatic gain control algorithms implemented in DSP **1120.**

Network **1119** may further communicate with multiple systems, including a server **1160** and other elements (not shown). For example, network **1119** may communicate with both an enterprise system and a web client system in order to accommodate various clients with various service levels.

UE **1100** preferably includes a microprocessor **1138** which controls the overall operation of the device. Communication functions, including at least data communications, are performed through communication subsystem **1111.** Microprocessor **1138** also interacts with further device subsystems such as the display **1122,** flash memory **1124,** random access memory (RAM) **1126,** auxiliary input/output (I/O) subsystems **1128,** serial port **1130,** keyboard **1132,** speaker **1134,** microphone **1136,** a short-range communications subsystem **1140** and any other device subsystems generally designated as **1142.**

Some of the subsystems shown in **Figure 7** perform communication-related functions, whereas other subsystems may provide "resident" or on-device functions. Notably, some subsystems, such as keyboard **1132** and display **1122,** for example, may be used for both communication-related functions, such as entering a text message for transmission over a communication network, and device-resident functions such as a calculator or task list.

Operating system software used by the microprocessor **1138** is preferably stored in a persistent store such as flash memory **1124,** which may instead be a read-only memory (ROM) or similar storage element (not shown). Those skilled in the art will appreciate that the operating system, specific device applications, or parts thereof, may be temporarily loaded into a volatile memory such as RAM **1126.** Received communication signals may also be stored in RAM **1126.** Further, a unique identifier is also preferably stored in read-only memory.

As shown, flash memory **1124** can be segregated into different areas for both computer programs **1158** and program data storage **1150, 1152, 1154** and **1156.** These different storage types indicate that each program can allocate a portion of flash memory **1124** for their own data storage requirements. Microprocessor **1138,** in addition to its operating system functions, preferably enables execution of software applications on the mobile device. A predetermined set of applications that control basic operations, including at least data and voice communication applications for example, will normally be installed on UE **1100** during manufacturing. A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **1119.** In a preferred embodiment, the PI M data items are seamlessly integrated, synchronized and updated, via the wireless network **1119,** with the mobile device user's corresponding data items stored or associated with a host computer system. Further applications may also be loaded onto the mobile device **1100** through the network **1119,** an auxiliary I/O subsystem **1128,** serial port **1130,** short-range communications subsystem **1140** or any other suitable subsystem **1142,** and installed by a user in the RAM **1126** or preferably a non-volatile store (not shown) for execution by the microprocessor **1138.** Such flexibility in application installation increases the functionality of the device and may provide enhanced on-device functions, communication-related functions, or both. For example, secure communication applications may enable electronic commerce functions and other such financial transactions to be performed using the UE **1100.** These applications will however, according to the above, in many cases need to be approved by a carrier.

In a data communication mode, a received signal such as a text message or web page download will be processed by the communication subsystem **1111** and input to the microprocessor **1138,** which preferably further processes the received signal for output to the display **1122,** or alternatively to an auxiliary I/O device **1128.** A user of UE **1100** may also compose data items such as email messages for example, using the keyboard **1132,** which is preferably a complete alphanumeric keyboard or telephone-type keypad, in conjunction with the display **1122** and possibly an auxiliary I/O device **1128.** Such composed items may then be transmitted over a communication network through the communication subsystem **1111.**

For voice communications, overall operation of UE **1100** is similar, except that received signals would preferably be output to a speaker **1134** and signals for transmission would be generated by a microphone **1136.** Alternative voice or audio I/O subsystems, such as a voice message recording subsystem, may also be implemented on UE **1100.** Although voice or audio signal output is preferably accomplished primarily through the speaker **1134,** display **1122** may also be used to provide an indication of the identity of a calling party, the duration of a voice call, or other voice call related information for example.

Serial port **1130** in **Figure 7** would normally be implemented in a personal digital assistant (PDA)-type mobile device for which synchronization with a user's desktop computer (not shown) may be desirable. Such a port **1130** would enable a user to set preferences through an external device or software application and would extend the capabilities of mobile device **1100** by providing for information or software downloads to UE **1100** other than through a wireless communication network. The alternate download path may for example be used to load an encryption key onto the device through a direct and thus reliable and trusted connection to thereby enable secure device communication.

Alternatively, serial port **1130** could be used for other communications, and could include as a universal serial bus (USB) port. An interface is associated with serial port **1130.**

Other communications subsystems **1140,** such as a short-range communications subsystem, is a further optional component which may provide for communication between UE **1100** and different systems or devices, which need not necessarily be similar devices. For example, the subsystem **1140** may include an infrared device and associated circuits and components or a Bluetooth^{™} communication module to provide for communication with similarly enabled systems and devices,

The embodiments described herein are examples of structures, systems or methods having elements corresponding to elements of the techniques of this disclosure. This written description may enable those skilled in the art to make and use embodiments having alternative elements that likewise correspond to the elements of the techniques of this disclosure. The intended scope of the techniques of this disclosure thus includes other structures, systems or methods that do not differ from the techniques of this disclosure as described herein, and further includes other structures, systems or methods with insubstantial differences from the techniques of this disclosure as described herein.

## Claims

1. A method to restore always on connectivity to user equipment, the method comprising the steps of:
monitoring whether the user equipment has transitioned to a second network that supports concurrent voice and data from a first network in which a packet switched service is suspended, said monitoring step including checking whether the user equipment is in a voice call during the transition; and
performing, upon detecting that the user equipment is in a voice call during the transition, a routing area update by sending a data packet to the second network that supports concurrent voice and data, causing said routing area update to be performed.

2. The method of claim 1, wherein the method further comprises the step of restoring preferred PDP contexts for the user equipment.

3. The method of claim 1 or 2, wherein said performing step occurs immediately after said handover.

4. The method of any of claims 1 to 3, wherein the user equipment is operable in both the second network that supports concurrent voice and data and a network that does not support concurrent voice and data.

5. The method of claim 4, wherein the second network that supports concurrent voice and data is a UMTS network.

6. The method of claim 4, wherein the network that does not support concurrent voice and data is a GPRS network.

7. The method of any of claims 4 to 6, wherein the monitoring step detects a transition between the network that does not support concurrent voice and data to the second network that supports concurrent voice and data.

8. The method of claim 7, wherein both the network that supports concurrent voice and data and the second network that does not support concurrent data have the same routing area.

9. The method of claim 8, wherein said second network that supports concurrent voice and data includes a first set of PDP contexts and the network that does not support concurrent voice and data includes a second set of PDP contexts, wherein the first set of PDP contexts is different from the second set of PDP contexts.

10. The method of claim 9, wherein the first set of PDP contexts includes fewer PDP contexts than the second set of PDP contexts.

11. Always-on user equipment (1100) adapted to restore always-on connectivity during network handover, the user equipment having a radio subsystem (1111) including a radio adapted to communicate with the mobile network; a radio processor having a digital signal processor (1120) and adapted to interact with said radio subsystem; a memory (1124,1126); a user interface (1144); a processor (1138) adapted to run user applications and interact with the memory, the radio and the user interface and adapted to run applications, the user equipment **characterized by** having means for:
monitoring whether the user equipment has transitioned to a second network that supports concurrent voice and data from a first network in which a packet switched service is suspended, said monitoring step including checking whether the user equipment is in a voice call during the transition; and
performing, upon detecting that the user equipment is in a voice call during the transition, a routing area update by sending a data packet to the second network that supports concurrent voice and data, causing said routing area update to be performed.

12. The user equipment of claim 11, further comprising means to restore preferred PDP contexts for the user equipment.

13. The user equipment of claim 11 or 12, wherein the second network that supports concurrent voice and data is a UMTS network.

14. The user equipment of any of claims 11 to 13, wherein the user equipment is operable in both the second network that supports concurrent voice and data and a network that does not support concurrent voice and data.

15. The user equipment of claim 14, wherein the network that does not support concurrent voice and data is a GPRS network.

16. The user equipment of claims 14 or 15, wherein the means for monitoring is adapted to detect a transition between the network that does not support concurrent voice and data to the second network that supports concurrent voice and data.

17. The user equipment of claim 16, wherein said second network that supports concurrent voice and data includes a first set of PDP contexts and the network that does not support concurrent voice and data includes a second set of PDP contexts, wherein the first set of PDP contexts is different from the second set of PDP contexts.

18. The user equipment of claim 17, wherein the first set of PDP contexts includes fewer PDP contexts than the second set of PDP contexts.

## Patentansprüche

1. Verfahren zum Wiederherstellen einer immer eingeschalteten Verbindung zu Benutzerausrüstung, das Verfahren umfassend die folgenden Schritte:
Überwachen, ob die Benutzerausrüstung von einem ersten Netz, in dem ein paketvermittelter Dienst ausgesetzt ist, zu einem zweiten Netz gewechselt hat, welches gleichzeitig Sprache und Daten unterstützt, wobei der Schritt des Überwachens das Überprüfen beinhaltet, ob die Benutzereinrichtung sich während des Wechsels in einem Sprachanruf befindet; und
Durchführen, wenn erkannt wird, dass sich die Benutzereinrichtung während des Wechsels in einem Sprachanruf befindet, einer Aktualisierung des Routing-Bereichs durch Senden eines Datenpakets zu dem zweiten Netz, welches gleichzeitig Sprache und Daten unterstützt, wodurch bewirkt wird, dass die Aktualisierung des Routing-Bereichs durchgeführt wird.

2. Verfahren gemäß Anspruch 1, wobei das Verfahren des Weiteren den Schritt des Wiederherstellens bevorzugter PDP-Kontexte für die Benutzerausrüstung umfasst.

3. Verfahren gemäß Anspruch 1 oder 2, wobei der Schritt des Durchführens unmittelbar nach dem Weiterreichen erfolgt.

4. Verfahren gemäß einem der Ansprüche 1 bis 3, wobei die Benutzerausrüstung sowohl in dem zweiten Netz, welches gleichzeitig Sprache und Daten unterstützt, als auch in einem Netz betrieben werden kann, welches nicht gleichzeitig Sprache und Daten unterstützt.

5. Verfahren gemäß Anspruch 4, wobei das zweite Netz, welches gleichzeitig Sprache und Daten unterstützt, ein UMTS-Netz ist.

6. Verfahren gemäß Anspruch 4, wobei das Netz, welches nicht gleichzeitig Sprache und Daten unterstützt, ein GPRS-Netz ist.

7. Verfahren gemäß einem der Ansprüche 4 bis 6, wobei der Schritt des Überwachens einen Wechsel von dem Netz, welches nicht gleichzeitig Sprache und Daten unterstützt, zu dem zweiten Netz erkennt, welches gleichzeitig Sprache und Daten unterstützt.

8. Verfahren gemäß Anspruch 7, wobei sowohl das Netz, welches gleichzeitig Sprache und Daten unterstützt, als auch das zweite Netz, welches nicht gleichzeitig Daten unterstützt, denselben Routing-Bereich haben.

9. Verfahren gemäß Anspruch 8, wobei das zweite Netz, welches gleichzeitig Sprache und Daten unterstützt, ein erstes Set von PDP-Kontexten enthält, und das Netz, welches nicht gleichzeitig Sprache und Daten unterstützt, ein zweites Set von PDP-Kontexten enthält, wobei sich das erste Set von PDP-Kontexten von dem zweiten Set von PDP-Kontexten unterscheidet.

10. Verfahren gemäß Anspruch 9, wobei das erste Set von PDP-Kontexten weniger PDP-Kontexte enthält als das zweite Set von PDP-Kontexten.

11. Immer eingeschaltete Benutzerausrüstung (1000), angepasst zum Wiederherstellen einer immer eingeschalteten Verbindung während des Weiterreichens zwischen Netzen, die Benutzerausrüstung verfügend über ein Funksubsystem (1111) mit einer Funkeinrichtung, die zur Kommunikation mit dem Mobilnetz angepasst ist; einen Funkprozessor, der über einen digitalen Signalprozessor (1120) verfügt und angepasst ist zum Interagieren mit dem Funksubsystem; einen Speicher (1124, 1126); eine Benutzeroberfläche (1144); einen Prozessor (1138), der angepasst ist zum Ausführen von Benutzeranwendungen und zum Interagieren mit dem Speicher, der Funkeinrichtung und der Benutzeroberfläche und angepasst ist zum Ausführen von Anwendungen, wobei die Benutzerausrüstung **dadurch gekennzeichnet ist, dass** sie über Mittel verfügt zum:
Überwachen, ob die Benutzerausrüstung von einem ersten Netz, in dem ein paketvermittelter Dienst ausgesetzt ist, zu einem zweiten Netz gewechselt hat, das gleichzeitig Sprache und Daten unterstützt, wobei der Schritt des Überwachens das Überprüfen beinhaltet, ob die Benutzereinrichtung sich während des Wechsels in einem Sprachanruf befindet; und
Durchführen, wenn erkannt wird, dass sich die Benutzereinrichtung während des Wechsels in einem Sprachanruf befindet, einer Aktualisierung des Routing-Bereichs durch Senden eines Datenpakets zu dem zweiten Netz, welches gleichzeitig Sprache und Daten unterstützt, wodurch bewirkt wird, dass die Aktualisierung des Routing-Bereichs durchgeführt wird.

12. Benutzerausrüstung gemäß Anspruch 11, des Weiteren umfassend Mittel zum Wiederherstellen bevorzugter PDP-Kontexte für die Benutzerausrüstung.

13. Benutzerausrüstung gemäß Anspruch 11 oder 12, wobei das zweite Netz, welches gleichzeitig Sprache und Daten unterstützt, ein UMTS-Netz ist.

14. Benutzerausrüstung gemäß einem der Ansprüche 11 bis 13, wobei die Benutzerausrüstung sowohl in dem zweiten Netz, welches gleichzeitig Sprache und Daten unterstützt, als auch in einem Netz betrieben werden kann, welches nicht gleichzeitig Sprache und Daten unterstützt.

15. Benutzerausrüstung gemäß Anspruch 14, wobei das Netz, welches nicht gleichzeitig Sprache und Daten unterstützt, ein GPRS-Netz ist.

16. Benutzerausrüstung gemäß den Ansprüchen 14 oder 15, wobei die Mittel zum Überwachen angepasst sind zum Erkennen eines Wechsels von dem Netz, welches nicht gleichzeitig Sprache und Daten unterstützt, zu dem zweiten Netz, welches gleichzeitig Sprache und Daten unterstützt.

17. Benutzerausrüstung gemäß Anspruch 16, wobei das zweite Netz, welches gleichzeitig Sprache und Daten unterstützt, ein erstes Set von PDP-Kontexten enthält, und das Netz, welches nicht gleichzeitig Sprache und Daten unterstützt, ein zweites Set von PDP-Kontexten enthält, wobei sich das erste Set von PDP-Kontexten von dem zweiten Set von PDP-Kontexten unterscheidet.

18. Benutzerausrüstung gemäß Anspruch 17, wobei das erste Set von PDP-Kontexten weniger PDP-Kontexte enthält als das zweite Set von PDP-Kontexten.

## Revendications

1. Un procédé pour restaurer une connectivité toujours active à un équipement d'utilisateur, le procédé comportant les étapes suivantes :
surveiller si l'équipement d'utilisateur a transité vers un deuxième réseau qui supporte la voix et les données simultanées depuis un premier réseau dans lequel un service à commutation de paquets est interrompu, ladite étape de surveillance comprenant vérifier si l'équipement d'utilisateur est en appel vocal durant le transit ; et
exécuter, une fois détecté que l'équipement d'utilisateur est en appel vocal durant le transit, une mise à jour de zone de routage en envoyant un paquet de données au deuxième réseau qui supporte la voix et les données simultanées, amenant ladite mise à jour de zone de routage à être exécutée.

2. Le procédé de la revendication 1, dans lequel le procédé comporte de plus l'étape de restauration des contextes PDP préférés pour l'équipement d'utilisateur.

3. Le procédé de la revendication 1 ou 2, dans lequel ladite étape d'exécution se produit immédiatement après ledit transfert.

4. Le procédé de n'importe lesquelles des revendications 1 à 3, dans lequel l'équipement d'utilisateur est utilisable à la fois dans le deuxième réseau qui supporte la voix et les données simultanées et dans un réseau qui ne supporte pas la voix et les données simultanées.

5. Le procédé de la revendication 4, dans lequel le deuxième réseau qui supporte la voix et les données simultanées est un réseau UMTS.

6. Le procédé de la revendication 4, dans lequel le réseau qui ne supporte pas la voix et les données simultanées est un réseau GPRS.

7. Le procédé de n'importe lesquelles des revendications 4 à 6, dans lequel l'étape de surveillance détecte un transit du réseau qui ne supporte pas la voix et les données simultanées vers le deuxième réseau qui supporte la voix et les données simultanées.

8. Le procédé de la revendication 7, dans lequel le réseau qui supporte la voix et les données simultanées et le deuxième réseau qui ne supporte pas les données simultanées ont tous les deux la même zone de routage.

9. Le procédé de la revendication 8, dans lequel ledit deuxième réseau qui supporte la voix et les données simultanées comprend un premier ensemble de contextes PDP et le réseau qui ne supporte pas la voix et les données simultanées comprend un deuxième ensemble de contextes PDP, dans lequel le premier ensemble de contextes PDP est différent du deuxième ensemble de contextes PDP.

10. Le procédé de la revendication 9, dans lequel le premier ensemble de contextes PDP comprend moins de contextes PDP que le deuxième ensemble de contextes PDP.

11. Un équipement d'utilisateur toujours actif (1100) adapté pour restaurer une connectivité toujours active durant un transfert de réseau, l'équipement d'utilisateur ayant un sous-système radio (1111) comprenant une radio adaptée pour communiquer avec le réseau mobile ; un processeur radio ayant un processeur de signal numérique (1120) et adapté pour interagir avec ledit sous-système radio ; une mémoire (1124, 1126) ; une interface utilisateur (1144) ; un processeur (1138) adapté pour exécuter des applications utilisateur et interagir avec la mémoire, la radio et l'interface utilisateur et adapté pour exécuter des applications, l'équipement d'utilisateur étant **caractérisé en ce qu'**il a des moyens pour :
surveiller si l'équipement d'utilisateur a transité vers un deuxième réseau qui supporte la voix et les données simultanées depuis un premier réseau dans lequel un service à commutation de paquets est interrompu, ladite étape de surveillance comprenant vérifier si l'équipement d'utilisateur est en appel vocal durant le transit ; et
exécuter, une fois détecté que l'équipement d'utilisateur est en appel vocal durant le transit, une mise à jour de zone de routage en envoyant un paquet de données au deuxième réseau qui supporte la voix et les données simultanées, amenant ladite mise à jour de zone de routage à être exécutée.

12. L'équipement d'utilisateur de la revendication 11, comportant de plus des moyens pour restaurer des contextes PDP préférés pour l'équipement d'utilisateur.

13. L'équipement d'utilisateur de la revendication 11 ou 12, dans lequel le deuxième réseau qui supporte la voix et les données simultanées est un réseau UMTS.

14. L'équipement d'utilisateur de n'importe lesquelles des revendications 11 à 13, dans lequel l'équipement d'utilisateur est utilisable à la fois dans le deuxième réseau qui supporte la voix et les données simultanées et dans un réseau qui ne supporte pas la voix et les données simultanées.

15. L'équipement d'utilisateur de la revendication 14, dans lequel le réseau qui ne supporte pas la voix et les données simultanées est un réseau GPRS.

16. L'équipement d'utilisateur des revendications 14 ou 15, dans lequel les moyens pour surveiller sont adaptés afin de détecter un transit du réseau qui ne supporte pas la voix et les données simultanées vers le deuxième réseau qui supporte la voix et les données simultanées.

17. L'équipement d'utilisateur de la revendication 16, dans lequel ledit deuxième réseau qui supporte la voix et les données simultanées comprend un premier ensemble de contextes PDP et le réseau qui ne supporte pas la voix et les données simultanées comprend un deuxième ensemble de contextes PDP, dans lequel le premier ensemble de contextes PDP est différent du deuxième ensemble de contextes PDP.

18. L'équipement d'utilisateur de la revendication 17, dans lequel le premier ensemble de contextes PDP comprend moins de contextes PDP que le deuxième ensemble de contextes PDP.
